# EUROPÄISCHE PATENTSCHRIFT

(11) **EP 4 419 783 B1**
(45) Veröffentlichungstag und Bekanntmachung des Hinweises auf die Patenterteilung: **21.01.2026**
(21) Anmeldenummer: 22802123.4
(22) Anmeldetag: 17.10.2022
(51) Int. Cl.: F02B 19/10, F02B 19/12, F02B 23/10, F02F 1/42

(54) **BRENNKRAFTMASCHINE SOWIE VERFAHREN ZUM BETREIBEN EINER BRENNKRAFTMASCHINE**
INTERNAL COMBUSTION ENGINE AND METHOD FOR OPERATING AN INTERNAL COMBUSTION ENGINE
MOTEUR À COMBUSTION INTERNE ET PROCÉDÉ D'OPÉRATION D'UN MOTEUR À COMBUSTION INTERNE

(30) Priorität: 19.10.2021 DE 102021127101
(43) Veröffentlichungstag der Anmeldung: 28.08.2024
(73) Patentinhaber: AUDI AG, 85057 Ingolstadt (DE)
(72) Erfinder: GROSS, Michael, 85055 Ingolstadt (DE); KOCH, Daniel, 80796 München (DE)
(74) Vertreter: Dietz, Christopher Friedrich
(86) Internationale Anmeldenummer: PCT/EP2022/078761
(87) Internationale Veröffentlichungsnummer: WO 2023/066828

(56) Entgegenhaltungen:
- EP-A1- 3 561 255
- WO-A1-2022/106189
- DE-A1- 102020 110 960
- DE-A1- 102020 213 028
- DE-A1- 102021 106 554
- JP-A- S61 250 364
- US-B1- 6 499 456

## Beschreibung

Die Erfindung betrifft eine Brennkraftmaschine mit wenigstens einem einen Brennraum aufweisenden Zylinder, wobei in den Brennraum über eine erste Einlasskanalmündungsöffnung ein erster Einlasskanal mit einem ersten Einlassventil sowie über eine zweite Einlasskanalmündungsöffnung ein zweiter Einlasskanal mit einem zweiten Einlassventil einmünden und von dem Brennraum über eine erste Auslasskanalmündungsöffnung ein erster Auslasskanal mit einem ersten Auslassventil sowie über eine zweite Auslasskanalmündungsöffnung ein zweiter Auslasskanal mit einem zweiten Auslassventil ausgehen, mit einem Kraftstoffinjektor zum Einbringen von Kraftstoff in den Brennraum zum Erzeugen eines Kraftstoff-Frischgas-Gemischs und mit einer ersten Zündkerze sowie einer zweiten Zündkerze zum Zünden des Kraftstoff-Frischgas-Gemischs, wobei eine Zündstelle der ersten Zündkerze außerhalb des Brennraums in einer mit dem Brennraum strömungstechnisch verbundenen Vorkammer angeordnet ist, und wobei die erste Zündkerze, die zweite Zündkerze und der Kraftstoffinjektor zwischen zwei gedachten parallelen Ebenen liegen, die parallel zu einer Längsmittelachse des Zylinders angeordnet und beabstandet voneinander sowohl zwischen den Einlasskanalmündungsöffnungen als auch zwischen den Auslasskanalmündungsöffnungen verlaufen. Die Erfindung betrifft weiterhin ein Verfahren zum Betreiben einer Brennkraftmaschine.

Aus dem Stand der Technik ist beispielsweise die Druckschrift DE 10 2012 107 242 B4 bekannt. Diese beschreibt einen Vorkammer-Strahlzünder, wobei: Luft von der Atmosphäre nach außerhalb von einer Verbrennungskammer, die einen sich hin- und herbewegenden Kolben aufweist, zugeführt wird; Kraftstoff in die Luft eingespritzt wird, um ein Luft-Kraftstoff-Gemisch zu bilden, und das Luft-Kraftstoff-Gemisch anschließend außerhalb der Verbrennungskammer verbrannt wird, um eine Verbrennungsflamme zu erzeugen; die Verbrennungsflamme in einen Raum innerhalb der Verbrennungskammer eingespritzt wird in Form von zumindest einer Strahl-Verbrennungsflamme; die Strahl-Verbrennungsflamme als eine Quelle zur Zündung dient, sodass der Kraftstoff, der in den Raum innerhalb der Verbrennungskammer eingespritzt wird, verbrannt wird; und ein Explosionstakt in der Verbrennungskammer angetrieben wird mittels Verbrennung des eingespritzten Kraftstoffs.

Weiterhin offenbart die Druckschrift EP 3 561 255 A1 einen Verbrennungsmotor für ein Kraftfahrzeug, der aufweist: mindestens einen Zylinder, der eine Längsachse hat und geeignet ist, Kraftstoff und Luft zum Durchführen eines Motorzyklus mit einer Verbrennungsreaktion des Kraftstoffs selbst aufzunehmen; mindestens einen Einlasskanal, der geeignet ist, dem Zylinder Frischluft über mindestens eine Einlassöffnung zuzuführen; mindestens ein Einlassventil, das auf die Einlassöffnung zum Steuern des in den Zylinder eintretenden Luftstroms wirkt; mindestens ein Einspritzventil, das selektiv aktiviert werden kann, um unverbrannten Kraftstoff dem Zylinder zuzuführen; mindestens einen Auslasskanal, der mit dem Zylinder über mindestens eine Auslassöffnung zum Entfernen von Abgasen aus dem Zylinder kommuniziert, die am Ende der Verbrennung gebildet sind; mindestens ein Auslassventil, das auf die Auslassöffnung zum Steuern des Stroms der Abgase am Auslass des Zylinders wirkt; und einen Kolben, der auf linear gleitende Weise entlang der Längsachse im Zylinder eingebaut ist; wobei die Einlassöffnung, die Auslassöffnung und das Einspritzventil durch einen Kopf des Motors getragen werden, wobei der Kopf in Anlage an einem Axialende des Zylinders angeordnet ist und mit dem Kolben und mit dem Zylinder einen Brennraum abgrenzt; wobei der Motor ferner aufweist: mindestens eine erste Zündkerze, die am Kopf angebaut ist und innerhalb des Brennraums zum zyklischen und selektiven Bestimmen der Zündung des Gemischs, das durch Kraftstoff und Luft gebildet ist, die im Brennraum vorhanden sind, und zum Auslösen der Verbrennungsreaktion wirkt.

Dabei ist vorgesehen, dass der Verbrennungsmotor weiter aufweist: eine Vorkammer, die zum Brennraum durch eine Wand abgegrenzt ist, mit dem Brennraum über eine oder mehrere freie Verbindungsöffnungen kommuniziert und der ein Luft-Kraftstoff-Gemisch zugeführt wirkt, und eine zweite Zündkerze, die innerhalb der Vorkammer zum zyklischen und selektiven Bestimmen der Zündung des Gemischs, das in der Vorkammer vorhanden ist, und zum Auslösen der Verbrennungsreaktion wirkt; wobei die erste Zündkerze an einer Zwischenposition zwischen der Vorkammer und der Einspritzdüse angeordnet ist. Aus dem Stand der Technik sind Druckschriften DE 10 2020 110960 A1, WO 2022/106189 A1 und JP S61 250364 A bekannt.

Es ist Aufgabe der Erfindung, eine Brennkraftmaschine vorzuschlagen, welche gegenüber bekannten Brennkraftmaschinen Vorteile aufweist, insbesondere eine niedrige thermische Belastung des Kraftstoffinjektors und der Zündkerzen erzielt sowie eine hervorragende Gemischbildung in den Brennraum sicherstellt.

Dies wird erfindungsgemäß mit einer Brennkraftmaschine mit den Merkmalen des Anspruchs 1 erreicht. Dabei ist vorgesehen, dass der Kraftstoffinjektor auf einer den Auslasskanalmündungsöffnungen abgewandten Seite einer die Längsmittelachse aufnehmenden und senkrecht auf den Ebenen stehenden gedachten Quermittelebene angeordnet ist.

Vorteilhafte Ausgestaltungen mit zweckmäßigen Weiterbildungen der Erfindung sind in den abhängigen Ansprüchen angegeben.

Die Brennkraftmaschine dient beispielsweise zum Antreiben eines Kraftfahrzeugs und insoweit zum Bereitstellen eines auf das Antreiben des Kraftfahrzeugs gerichteten Antriebsdrehmoments. Die Brennkraftmaschine kann hierbei Bestandteil des Kraftfahrzeugs sein, jedoch selbstverständlich auch separat von ihm vorliegen. Zum Bereitstellen des Antriebsdrehmoments weist die Brennkraftmaschine den wenigstens einen Zylinder auf. Bevorzugt liegen jedoch mehrere Zylinder vor. Soweit im Rahmen dieser Beschreibung von dem Zylinder beziehungsweise dem wenigstens einen Zylinder die Rede ist, so sind die Ausführungen stets auf jeden von mehreren Zylindern der Brennkraftmaschine übertragbar.

Der Zylinder ist vorzugsweise in einem Zylinderkurbelgehäuse der Brennkraftmaschine ausgestaltet. In dem Zylinder ist ein Kolben angeordnet, welcher antriebstechnisch mit einer Kurbelwelle der Brennkraftmaschine gekoppelt ist, insbesondere über wenigstens eine Pleuelstange. Der Kolben begrenzt zusammen mit einer Zylinderwand des Zylinders und einem Zylinderdach des Zylinders den Brennraum. Die Zylinderwand ist insbesondere von dem Zylinderkurbelgehäuse gebildet. Das Zylinderdach liegt bevorzugt an einem Zylinderkopf der Brennkraftmaschine vor, welcher an dem Zylinderkurbelgehäuse befestigt ist. Der Zylinderkopf schließt insoweit den Zylinder auf der dem Kolben gegenüberliegenden Seite ab. Liegen mehrere Zylinder vor, so verfügt jeder dieser mehreren Zylinder über einen separaten Brennraum.

In den Brennraum beziehungsweise in jeden Brennraum münden mehrere Einlasskanäle ein, nämlich der erste Einlasskanal und der zweiter Einlasskanal. Zudem gehen von dem Brennraum beziehungsweise jedem Brennraum mehrere Auslasskanäle aus, nämlich der erste Auslasskanal und der zweite Auslasskanal. Über die Einlasskanäle wird dem Brennraum während eines Betriebs der Brennkraftmaschine Frischgas oder ein Kraftstoff-Frischgas-Gemisch zugeführt. Unter dem Frischgas ist insbesondere Frischluft, bevorzugt aus einer Außenumgebung der Brennkraftmaschine, zu verstehen. Das Frischgas kann zusätzlich zu der Frischluft jedoch Abgas mit einem beliebigen Anteil enthalten, sofern die Brennkraftmaschine zur Abgasrückführung ausgestaltet ist. Ist dies der Fall, so wird aus dem Brennraum abgeführtes Abgas dem Brennraum erneut zugeführt, nämlich über zumindest einen der Einlasskanäle.

Während des Betriebs der Brennkraftmaschine wird mittels des Kraftstoffinjektors Kraftstoff in den Brennraum eingebracht. Hierzu mündet der Kraftstoffinjektor in den Brennraum ein oder grenzt zumindest an ihn an, nämlich derart, dass eine Einspritzdüse des Kraftstoffinjektors strömungstechnisch an den Brennraum angeschlossen ist beziehungsweise an ihn angrenzt. Durch das Einbringen des Kraftstoffs in den Brennraum bildet sich in dem Brennraum das Kraftstoff-Frischgas-Gemisch aus. Dieses wird mithilfe zumindest einer der Zündkerzen, also der ersten Zündkerze, der zweiten Zündkerze oder sowohl der ersten Zündkerze als auch der zweiten Zündkerze, gezündet und verbrennt nachfolgend. Hierbei entsteht Abgas, welches aus dem Brennraum abgeführt wird, nämlich durch die Auslasskanäle. Die Auslasskanäle gehen hierzu von dem Brennraum aus.

Jeder der Einlasskanäle mündet über eine der Einlasskanalmündungsöffnungen in den Brennraum ein, nämlich der erste Einlasskanal über die erste Einlasskanalmündungsöffnung und der zweiter Einlasskanal über die zweite Einlasskanalmündungsöffnung. In anderen Worten ist durch das Einmünden des ersten Einlasskanals in den Brennraum die erste Einlasskanalmündungsöffnung ausgebildet und durch das Einmünden des zweiten Einlasskanals in den Brennraum die zweite Einlasskanalmündungsöffnung. Entsprechend liegt die jeweilige Einlasskanalmündungsöffnung auf der dem Brennraum zugewandten Seite des jeweiligen Einlasskanals vor.

Dem ersten Einlasskanal ist das erste Einlassventil zugeordnet, dem zweiten Einlasskanal das zweite Einlassventil. Die beiden Einlassventile dienen dem Einstellen eines Durchsatzes des Frischgases beziehungsweise des Kraftstoff-Frischgas-Gemischs durch die Einlasskanäle. Ein Ventilelement des jeweiligen Einlassventils liegt in einer ersten Stellung zum Verschließen des jeweiligen Einlasskanals an einem entsprechenden Ventilsitz an und ist in einer zweiten Stellung zum Freigeben des jeweiligen Einlasskanals von dem Ventilsitz beabstandet angeordnet. Beispielsweise sind die Ventilsitze der Einlassventile von dem Zylinderkopf gebildet.

Analog geht jeder der Auslasskanäle über eine der Auslasskanalmündungsöffnungen von dem Brennraum aus, nämlich der erste Auslasskanal über die erste Auslasskanalmündungsöffnung und der zweite Auslasskanal über die zweite Auslasskanalmündungsöffnung. In anderen Worten ist durch das Ausgehen des ersten Auslasskanals von dem Brennraum die erste Auslasskanalmündungsöffnung ausgebildet und durch das Ausgehen des zweiten Auslasskanals von dem Brennraum die zweite Auslasskanalmündungsöffnung. Entsprechend liegt die jeweilige Auslasskanalmündungsöffnung auf der dem Brennraum zugewandten Seite des jeweiligen Auslasskanals vor.

Dem ersten Auslasskanal ist das erste Auslassventil zugeordnet, dem zweiten Auslasskanal das zweite Auslassventil. Die beiden Auslassventile dienen dem Ausstellen eines Durchsatzes des Abgases durch die Auslasskanäle. Ein Ventilelement des jeweiligen Auslassventils liegt in einer ersten Stellung zum Verschließen des jeweiligen Auslasskanals an einem entsprechenden Ventilsitz an und ist in einer zweiten Stellung zum Freigeben des jeweiligen Auslasskanals von dem entsprechenden Ventilsitz beabstandet angeordnet. Beispielsweise sind, insbesondere auch, die Ventilsitze der Auslassventile von dem Zylinderkopf gebildet.

Zur Erzielung einer hohen Leistungsdichte liegt eine spezielle Anordnung der ersten Zündkerze, der zweiten Zündkerze und des Kraftstoffinjektors vor. Diese sind nämlich jeweils zumindest bereichsweise oder sogar vollständig zwischen den beiden gedachten parallelen Ebenen angeordnet. Die beiden Ebenen liegen beabstandet parallel zueinander vor. Zudem sind sie jeweils parallel zu der Längsmittelachse des Zylinders angeordnet. Weiterhin verlaufen sie jeweils zwischen den Einlasskanalmündungsöffnungen hindurch und ebenso zwischen den Auslasskanalmündungsöffnungen.

Vorzugsweise liegen die Ebenen auf gegenüberliegenden Seiten der Längsmittelebene, also eine erste der Ebenen auf einer ersten Seite der Längsmittelebene und eine zweite der Ebenen auf einer der ersten Seite gegenüberliegenden zweiten Seite der Längsmittelebene. Hierbei verlaufen die Ebenen parallel zu der Längsmittelebene. Vorzugsweise sind die Ebenen symmetrisch zu der Längsmittelebene angeordnet, weisen also den gleichen Abstand zu dieser auf.

Beispielsweise - jedoch lediglich optional - schmiegen sich die Ebenen jeweils an eine der Einlasskanalmündungsöffnungen und/oder eine der Auslasskanalmündungsöffnungen tangential an. Bevorzugt gilt dies für diejenige der Mündungsöffnungen, welche den kleineren Abstand zu einer Längsmittelebene aufweist, die die Längsmittelachse in sich aufnimmt und parallel zu den beiden Ebenen angeordnet ist, insbesondere mittig zwischen ihnen vorliegt. Besonders bevorzugt liegen die gedachten Ebenen auf gegenüberliegenden Seiten der Längsmittelebene jeweils an der dort angeordneten Einlasskanalmündungsöffnung oder der dort angeordneten Auslasskanalmündungsöffnung an. Insbesondere liegt eine erste der Ebenen auf einer ersten Seite der Längsmittelebene tangential an der ersten Einlasskanalmündungsöffnung und eine zweite der Ebenen auf einer der ersten Seite gegenüberliegenden zweiten Seite der Längsmittelebene an der zweiten Einlasskanalmündungsöffnung tangential an.

Jede der Zündkerzen weist eine separate Zündstelle auf; die erste Zündkerze verfügt also über eine erste Zündstelle und die zweite Zündkerze über eine zweite Zündstelle. Unter der Zündstelle ist diejenige Stelle zu verstehen, an welcher die Zündkerze während des Betriebs der Brennkraftmaschine einen Zündfunken erzeugt. Die Zündstellen der beiden Zündkerzen liegen bevorzugt zwischen den beiden gedachten Ebenen, insbesondere liegen sie in der Längsmittelebene. Auch die Einspritzdüse des Kraftstoffinjektors liegt zwischen den beiden gedachten Ebenen und bevorzugt in der Längsmittelebene. In anderen Worten wird eine Mündungsöffnung, über welche die Einspritzdüse in den Brennraum einmündet, von der Längsmittelebene geschnitten.

Es ist vorzugsweise - jedoch rein optional - vorgesehen, dass eine Zündstelle der ersten Zündkerze außerhalb des Brennraums in einer mit dem Brennraum strömungstechnisch verbundenen Vorkammer angeordnet ist, insbesondere dass die erste Zündkerze eine die Vorkammer aufweisende Vorkammerzündkerze ist oder in die Vorkammer hineinragt beziehungsweise an sie angrenzt. Die Zündstelle der ersten Zündkerze liegt also nicht in dem Brennraum, sondern in der Vorkammer vor. Unter der Vorkammer ist eine Kammer zu verstehen, welche durch eine Vorkammerwand von dem Brennraum abgetrennt ist, strömungstechnisch jedoch mit ihm in Verbindung steht. Beispielsweise ist hierzu in der Vorkammerwand wenigstens eine Überströmöffnung ausgestaltet. Besonders bevorzugt liegen mehrere derartiger Überströmöffnungen vor.

Die Vorkammer liegt beispielsweise ebenso wie der Brennraum in dem Zylinder vor, insbesondere also auf der dem Brennraum zugewandten Seite des Zylinderdachs, bevorzugt nur teilweise oder vollständig. Es kann jedoch auch vorgesehen sein, dass die Vorkammer zumindest teilweise oder vollständig auf der dem Zylinder abgewandten Seite des Zylinderdachs angeordnet ist und insoweit außerhalb des Zylinders. Hierzu ist die Vorkammer beispielsweise in dem Zylinderkopf angeordnet.

Über die Überströmöffnung beziehungsweise die Überströmöffnungen wird zumindest zeitweise Fluid zwischen dem Brennraum und der Vorkammer ausgetauscht. Das Fluid strömt also entweder aus dem Brennraum in die Vorkammer oder umgekehrt aus der Vorkammer in den Brennraum. Beispielsweise ist es vorgesehen, dass zunächst das in dem Brennraum vorliegende, unverbrannte Kraftstoff-Frischgas-Gemisch aus dem Brennraum in die Vorkammer strömt. Nachfolgend wird das Kraftstoff-Frischgas-Gemisch mittels der ersten Zündkerze in der Vorkammer gezündet, worauf das gezündete Gemisch aus der Vorkammer in den Brennraum eintritt und dass dort vorliegenden Gemisch ebenfalls zündet.

Die Vorkammer kann grundsätzlich beliebig ausgestaltet sein. Beispielsweise kann die Vorkammer Bestandteil der ersten Zündkerze sein und diese entsprechend als Vorkammerzündkerze vorliegen. Es kann jedoch auch vorgesehen sein, dass die Vorkammer an beziehungsweise in dem Zylinderdach ausgestaltet ist, vorzugsweise von dem Zylinderkopf. In diesem Fall ragt die erste Zündkerze in die Vorkammer hinein beziehungsweise schließt sich unmittelbar an diese an, sodass ihre Zündstelle in der Vorkammer vorliegt. Die Verwendung der Vorkammer hat insbesondere bei hoher Last der Brennkraftmaschine Vorteile, insbesondere wird dort eine besonders hohe Effizienz erzielt. Durch die beschriebene Anordnung der ersten Zündkerze wird die thermisch besonders empfindliche Ausgestaltung mit der Vorkammer effektiv vor einem übermäßigen Wärmeeintrag geschützt.

Eine besonders hohe Leistungsdichte der Brennkraftmaschine wird durch eine spezielle Anordnung des Kraftstoffinjektors erzielt. Dieser ist zumindest bereichsweise auf der den Auslasskanalmündungsöffnungen abgewandten Seite der Quermittelebene angeordnet. Unter der Quermittelebene ist eine Ebene zu verstehen, welche zum einen die Längsmittelachse in sich aufnimmt und andererseits senkrecht auf der Längsmittelebene steht beziehungsweise senkrecht auf den beiden gedachten Ebenen. Beispielsweise liegen die Einlasskanalmündungsöffnungen zumindest teilweise, insbesondere größtenteils beziehungsweise überwiegend auf einer ersten Seite der Quermittelebene vor und die Auslasskanalmündungsöffnungen liegen zumindest teilweise, also größtenteils oder überwiegend, insbesondere vollständig, auf einer zweiten Seite der Quermittelebene.

Der Kraftstoffinjektor ist auf der ersten Seite der Quermittelebene angeordnet, also auf derselben Seite der Quermittelebene wie die Einlasskanalmündungsöffnungen beziehungsweise auf der Seite, auf welcher die Einlasskanalmündungsöffnungen größtenteils beziehungsweise überwiegend angeordnet sind. Anders ausgedrückt ist der Kraftstoffinjektor zumindest bereichsweise, insbesondere vollständig, auf der den Auslasskanalmündungsöffnungen abgewandten Seite der Einlasskanalmündungsöffnungen positioniert. Vorzugsweise gilt dies zumindest für die Einspritzdüse beziehungsweise ihre Mündungsöffnung in den Brennraum.

Durch eine solche Anordnung des Kraftstoffinjektors wird seine thermische Belastung gegenüber einer Anordnung auf der anderen Seite der Quermittelebene, also auf der den Auslasskanalmündungsöffnungen zugewandten Seite der Quermittelebene, deutlich reduziert. Zudem ist es möglich auch die thermische Belastung der Zündkerzen zu senken. Weiterhin erfolgt bei der beschriebenen Anordnung des Kraftstoffinjektors das Einbringen des Kraftstoffs mittels des Kraftstoffinjektors im Wesentlichen in der gleichen Richtung wie das Zuführen des Frischgases beziehungsweise des Kraftstoff-Frischgas-Gemischs durch die Einlasskanäle. Der eingebrachte Kraftstoff und das eingebrachte Frischgas weisen also während ihres jeweiligen Einbringens in identischen Koordinatensystemen Geschwindigkeitskomponenten mit gleichen Vorzeichen auf, wohingegen die Absolutwerte der Geschwindigkeitskomponenten selbstverständlich deutlich voneinander abweichen können. Die beschriebene Ausgestaltung der Brennkraftmaschine ermöglicht vorzugsweise eine Leistungsdichte von mindestens 100 kW/l, mindestens 110 kW/l, mindestens 120 kW/I oder mindestens 125 kW/I bei einem Verbrennungsluftverhältnis von λ = 1.

Eine Weiterbildung der Erfindung sieht vor, dass der erste Auslasskanal und der zweite Auslasskanal auf ihrer dem Brennraum abgewandten Seite jeweils in einen in einem Zylinderkopf der Brennkraftmaschine ausgebildeten Abgaskrümmer einmünden. In anderen Worten verfügt die Brennkraftmaschine über einen integrierten Abgaskrümmer, der in dem Zylinderkopf vorliegt. Insbesondere wird der Abgaskrümmer während eines Gießvorgangs des Zylinderkopfs in diesem hergestellt. Es ist also gerade nicht vorgesehen, dass der erste Auslasskanal und der zweite Auslasskanal zunächst vollständig den Zylinderkopf durchgreifen und an einen außenseitig an dem Zylinderkopf montierten Abgaskrümmer strömungstechnisch angeschlossen sind. Vielmehr wird das durch die beiden Auslasskanäle aus dem Brennraum austretende Abgas bereits in dem Zylinderkopf zusammengeführt und gemeinsam abgeführt.

Im Falle der mehreren Zylinder der Brennkraftmaschine sind die Auslasskanäle aller Zylinder beziehungsweise alle an die Brennräume der Zylinder angeschlossenen Auslasskanäle auf ihrer dem jeweiligen Brennraum abgewandten Seite an den Abgaskrümmer strömungstechnisch angeschlossen beziehungsweise münden innerhalb des Zylinderkopfs in diesen ein. Hierdurch wird eine kompakte Bauform der Brennkraftmaschine erzielt. Die Integration des Abgaskrümmers in den Zylinderkopf wird insbesondere durch die Reduzierung der thermischen Belastung möglich.

In einer weiteren vorteilhaften Ausgestaltung der Brennkraftmaschine ist vorgesehen, dass ein Durchmesser des Zylinders beziehungsweise des Brennraums höchstens 85 mm, höchstens 82,5 mm oder höchstens 80 mm beträgt. Die beschriebene Ausgestaltung der Brennkraftmaschine ist insbesondere für kleine Brennraumdurchmesser besonders geeignet. Die Reduzierung der thermischen Belastung ermöglicht eine Reduzierung eines Bauraums der Brennkraftmaschine.

Eine Weiterbildung der Erfindung sieht vor, dass die Brennkraftmaschine einen Verdichter aufweist, der auf der dem Brennraum abgewandten Seite strömungstechnisch an die Einlasskanäle angeschlossen ist. Der Verdichter ist beispielsweise der Verdichter eines Abgasturboladers, ein elektrisch unterstützter Verdichter oder ein elektrisch angetriebener Verdichter. In jedem Fall dient der Verdichter dem Verdichten des dem Brennraum zugeführten Frischgases von einem niedrigeren ersten Druck auf einen höheren zweiten Druck. Saugseitig ist der Verdichter beispielsweise an die Außenumgebung der Brennkraftmaschine angebunden, insbesondere über einen Luftfilter. Druckseitig ist der Verdichter an den Brennraum strömungstechnisch angeschlossen, nämlich über die Einlasskanäle. Die Verwendung des Verdichters ermöglicht eine besonders hohe Effizienz und/oder eine besonders hohe Leistungsdichte der Brennkraftmaschine.

Eine Weiterbildung der Erfindung sieht vor, dass wenigstens einer der Einlasskanäle als Hochtumble-Einlasskanal ausgestaltet ist. Der Einlasskanal weist insoweit eine Geometrie auf, welche eine Tumbleströmung des durch den Einlasskanal in den Brennraum eingebrachten Frischgases erzeugt. Hierdurch wird eine besonders gute Verwirbelung des in den Brennraum eingebrachten Kraftstoffs und entsprechend eine gute Homogenisierung sowie eine besonders gute Füllung des Brennraums mit Frischgas realisiert.

Die Erfindung sieht vor, dass eine Einspritzdüse des Kraftstoffinjektors in einen Teilraum des Brennraums einmündet, der von einer sich zwischen die Einlasskanalmündungsöffnungen erstreckende Vertiefung eines Zylinderdach des Zylinders gebildet ist. Das Zylinderdach ist vorzugsweise von dem Zylinderkopf der Brennkraftmaschine gebildet, sodass auch davon gesprochen werden kann, dass die Vertiefung in dem Zylinderkopf ausgestaltet ist, nämlich auf der dem Brennraum zugewandten Seite des Zylinderkopfs. Die Vertiefung erstreckt sich zwischen die Einlasskanalmündungsöffnungen hinein, nämlich in Richtung der Auslasskanalmündungsöffnungen. Insbesondere ist die Vertiefung hierbei zwischen den beiden gedachten Ebene ausgestaltet, zumindest bereichsweise. Die Vertiefung kann auch als Schnaupe bezeichnet werden.

In Richtung der Längsmittelebene gesehen übergreift die Vertiefung die Einlasskanalmündungsöffnungen bezogen auf einen Abstand zwischen einer den Auslasskanalmündungsöffnungen abgewandten Seite der Einlasskanalmündungsöffnungen bis zu einer den Auslasskanalmündungsöffnungen zugewandten Seite der Einlasskanalmündungsöffnungen zu mindestens 30 %, mindestens 40 % oder mindestens 50 %. Beispielsweise beträgt hierbei ein Abstand zwischen der Vertiefung und der ersten Zündkerze höchstens 200 %, höchstens 150 % oder höchstens 100 % eines Abstands zwischen den beiden Zündkerzen.

In der Vertiefung liegt der Teilraum des Brennraums vor, in welchen die Einspritzdüse des Kraftstoffinjektors einmündet. Unter der Einspritzdüse ist eine Öffnung des Kraftstoffinjektors zu verstehen, durch welche zeitweise Kraftstoff in den Brennraum eingebracht wird. Die Einspritzdüse ist insbesondere die einzige Düse des Kraftstoffinjektors, sodass der Kraftstoff ausschließlich durch die Einspritzdüse in den Brennraum eingebracht wird. Die Einspritzdüse weist auf ihrer dem Brennraum zugewandten Seite mindestens eine Mündungsöffnung auf beziehungsweise mündet unter Ausbildung dieser mindestens einen Mündungsöffnung in den Brennraum ein. Es kann genau eine Mündungsöffnung vorliegen. Alternativ weist der Kraftstoffinjektor beziehungsweise die Einspritzdüse mehrere Mündungsöffnungen auf, beispielsweise mindestens fünf Mündungsöffnungen. Die beschriebene Ausgestaltung ermöglicht eine besonders effiziente Verwirbelung des Kraftstoffs mit dem durch die Einlasskanäle in den Brennraum eingebrachten Frischgas, sodass sich ein homogenes Kraftstoff-Frischgas-Gemisch ergibt.

Eine Weiterbildung der Erfindung sieht vor, dass die Vertiefung sich auf eine Breite aufweitet, die größer ist als ein Abstand der Einlasskanalmündungsöffnungen voneinander. Unter dem Abstand der Einlasskanalmündungsöffnungen ist ihr minimaler Abstand zu verstehen. Der zwischen den Einlasskanalmündungsöffnungen vorliegende Bereich der Vertiefung weist selbstredend eine Breite auf, welche kleiner ist als der Abstand. Abseits der Einlasskanalmündungsöffnungen weitet sich die Vertiefung jedoch auf, insbesondere den Konturen der Einlasskanalmündungsöffnungen folgend. Ein Rand der Vertiefung ist insoweit an die Einlasskanalmündungsöffnungen formangepasst und entsprechend gekrümmt, sodass er zumindest bereichsweise einen gleichbleibenden Abstand von der jeweiligen Einlasskanalmündungsöffnung aufweist. Beispielsweise weitet sich die Vertiefung bis auf eine Breite auf, welche um einen Faktor von mindestens 1,5, mindestens 2,0 oder mindestens 2,5 größer ist als der Abstand der Einlasskanalmündungsöffnungen voneinander. Hierdurch wird eine Benetzung des Zylinderdachs mit Kraftstoff während seines Einbringens in den Brennraum effektiv vermieden und der Kraftstoff wird effizient in dem Frischgas verwirbelt.

Eine Weiterbildung der Erfindung sieht vor, dass die Einspritzdüse in Richtung einer senkrecht sowohl auf der Längsmittelachse als auch auf der Quermittelebene stehenden gedachten Mittelgeraden von den Einlasskanalmündungsöffnungen beabstandet angeordnet ist. Aufgrund der geforderten Anordnung der Mittelgeraden liegt diese in der bereits erwähnten Längsmittelebene. In Richtung dieser Mittelgeraden ist die Einspritzdüse beziehungsweise ihre Mündungsöffnung in den Brennraum von den Einlasskanalmündungsöffnungen beabstandet angeordnet. Vorzugsweise erstreckt sich die erwähnte Vertiefung hierzu vollständig zwischen den Einlasskanalmündungsöffnungen heraus, nämlich in Richtung der Mittelgeraden in die von den Auslasskanalmündungsöffnungen abgewandte Richtung.

In anderen Worten liegt in Draufsicht auf das Zylinderdach in Richtung der Mittelgeraden keine Überlappung zwischen der Einspritzdüse beziehungsweise ihrer mindestens einen Mündungsöffnung einerseits und den Einlasskanalmündungsöffnungen andererseits vor. Beispielsweise ist hierbei ein Abstand zwischen der Einspritzdüse beziehungsweise ihrer mindestens einen Mündungsöffnung und der ersten Zündkerze um einen Faktor von mindestens 5, mindestens 6 oder mindestens 7 größer als der Abstand zwischen den beiden Zündkerzen. Erneut wird hierdurch eine besonders gute Verwirbelung des in den Brennraum eingebrachten Kraftstoffs erzielt.

Eine Weiterbildung der Erfindung sieht vor, dass die erste Zündkerze und die zweite Zündkerze auf gegenüberliegenden Seiten der Quermittelebene angeordnet sind, insbesondere dass die erste Zündkerze auf einer den Einlasskanalmündungsöffnungen zugewandten Seite der Quermittelebene angeordnet ist und/oder dass die zweite Zündkerze auf einer den Auslasskanalmündungsöffnungen zugewandten Seite der Quermittelebene angeordnet ist. Zumindest ein Teil der ersten Zündkerze, insbesondere nur ein Teil der gesamten ersten Zündkerze oder die gesamte erste Zündkerze, liegt also auf der ersten Seite der Quermittelebene und die zweite Zündkerze liegt zumindest teilweise, vorzugsweise nur teilweise oder vollständig, auf der zweiten Seite der Quermittelebene vor.

Hierbei ist die erste Zündkerze vorzugsweise auf Seiten der Einlasskanalmündungsöffnungen und die zweite Zündkerze auf Seiten der Auslasskanalmündungsöffnungen angeordnet. Hierdurch wird eine besonders deutliche thermische Entlastung der ersten Zündkerze erzielt. In Draufsicht auf das Zylinderdach gesehen, insbesondere von dem Brennraum aus, ist die erste Zündkerze zumindest bereichsweise zwischen den Einlasskanalmündungsöffnungen angeordnet, besonders bevorzugt also nur teilweise oder vollständig. Die zweite Zündkerze ist hingegen zumindest teilweise, bevorzugt nur teilweise oder vollständig, in der Draufsicht zwischen den Auslasskanalmündungsöffnungen angeordnet.

Eine Weiterbildung der Erfindung sieht vor, dass in die Vorkammer ein weiterer Kraftstoffinjektor der Brennkraftmaschine einmündet. Der weitere Kraftstoffinjektor dient dem Einbringen von Kraftstoff unmittelbar in die Vorkammer, also unter Umgehung des Brennraums. Der mittels des weiteren Kraftstoffinjektors in die Vorkammer eingebrachte Kraftstoff liegt zusätzlich zu dem mittels des Kraftstoffinjektors in den Brennraum eingebrachten Kraftstoff vor. Die Verwendung des weiteren Kraftstoffinjektors ermöglicht eine weitere Erhöhung der Effizienz und/oder der Leistungsdichte der Brennkraftmaschine und zudem eine besonders effiziente Zündung und Verbrennung des Kraftstoff-Frischgas-Gemischs in dem Brennraum.

Eine Weiterbildung der Erfindung sieht vor, dass der Kraftstoffinjektor zum Einbringen von reinem Kraftstoff oder eines Kraftstoff-Frischgas-Gemischs in die Vorkammer vorgesehen und ausgestaltet ist. Eine solche Vorkammer kann auch als aktive Vorkammer bezeichnet werden. Selbstverständlich kann die Vorkammer jedoch auch als rein passive Vorkammer ausgeführt sein, bei welcher auf den weiteren Kraftstoffinjektors verzichtet wird. Bei einer solchen Vorkammer stammt der in ihr vorliege Kraftstoff ausschließlich aus dem Brennraum.

Es kann vorgesehen sein, dass mithilfe des Kraftstoffinjektors zeitweise reiner Kraftstoff in die Vorkammer eingebracht wird, also Kraftstoff ohne eine Frischgaskomponente. Besonders vorteilhaft ist es jedoch, wenn mithilfe des weiteren Kraftstoffinjektors zusammen mit dem Kraftstoff Frischgas unmittelbar in die Vorkammer eingebracht wird, also unter Umgehung des Brennraums. Entsprechend ist es vorgesehen, dem Brennraum unmittelbar Kraftstoff und Frischgas zuzuführen, nämlich unter Umgehung der Vorkammer, und zusätzlich der Vorkammer das Kraftstoff-Frischgas-Gemisch zuzuführen, nämlich unter Umgehung der Brennkammer. Hierdurch wird eine besonders hohe Effizienz und/oder Leistung der Brennkraftmaschine erzielt.

Eine Weiterbildung der Erfindung sieht vor, dass eine Zündstelle der zweiten Zündkerze in dem Brennraum angeordnet ist, insbesondere dass die zweite Zündkerze als Hakenzündkerze vorliegt. In anderen Worten ist die zweite Zündkerze gerade nicht als Vorkammerzündkerze ausgestaltet, sondern ihre Zündstelle liegt unmittelbar in dem Brennraum. Hierbei ist die Zündstelle bevorzugt beabstandet von dem Zylinderdach angeordnet. Beispielsweise liegt die zweite Zündkerze als herkömmliche Hakenzündkerze vor, bei welcher eine Mittelelektrode sowie wenigstens eine hakenförmige Masseelektrode vorliegt. Selbstverständlich kann die zweite Zündkerze auch mehr als eine solche Masseelektrode aufweisen, welche jeweils hakenförmig und in Richtung der Mittelelektrode geneigt beziehungsweise gebogen sind. Mithilfe der zweiten Zündkerze kann in bestimmten Betriebsbereichen der Brennkraftmaschine ein besonders effektiver Betrieb erzielt werden.

Eine Weiterbildung der Erfindung sieht vor, dass - in Richtung der Mittelgeraden gesehen - die erste Zündkerze zwischen dem Kraftstoffinjektor und der zweiten Zündkerze angeordnet ist. Hieraus ergibt sich vorzugsweise die vorstehend bereits erwähnte Anordnung der Zündkerzen, nämlich der ersten Zündkerze zumindest bereichsweise zwischen den Einlasskanalmündungsöffnungen und der zweiten Zündkerze zumindest bereichsweise zwischen den Auslasskanalmündungsöffnungen. In jedem Fall überstreicht der aus dem Kraftstoffinjektor in den Brennraum austretende Kraftstoff zunächst die erste Zündkerze und erst anschließend die zweite Zündkerze. Im Falle der Anordnung der Zündstelle der ersten Zündkerze in der Vorkammer wird so ein effektiver Eintrag des Kraftstoffs in die Vorkammer erzielt.

Die Erfindung betrifft weiterhin ein Verfahren zum Betreiben einer Brennkraftmaschine, insbesondere einer Brennkraftmaschine gemäß den Ausführungen im Rahmen dieser Beschreibung, wobei die Brennkraftmaschine über wenigstens einen einen Brennraum aufweisenden Zylinder verfügt, wobei in den Brennraum über eine erste Einlasskanalmündungsöffnung ein erster Einlasskanal mit einem ersten Einlassventil sowie über eine zweite Einlasskanalmündungsöffnung ein zweiter Einlasskanal mit einem zweiten Einlassventil einmünden und von dem Brennraum über eine erste Auslasskanalmündungsöffnung ein erster Auslasskanal mit einem ersten Auslassventil sowie über eine zweite Auslasskanalmündungsöffnung ein zweiter Auslasskanal mit einem zweiten Auslassventil ausgehen.

Die Brennkraftmaschine weist weiter einen Kraftstoffinjektor zum Einbringen von Kraftstoff in den Brennraum zum Erzeugen eines Kraftstoff-Frischgas-Gemischs und eine erste Zündkerze sowie eine zweite Zündkerze zum Zünden des Kraftstoff-Frischgas-Gemischs auf, wobei eine Zündstelle der ersten Zündkerze außerhalb des Brennraums in einer mit dem Brennraum strömungstechnisch verbundenen Vorkammer angeordnet ist, und wobei die erste Zündkerze, die zweite Zündkerze und der Kraftstoffinjektor zwischen zwei gedachten parallelen Ebenen liegen, die parallel zu einer Längsmittelachse des Zylinders angeordnet und beabstandet voneinander sowohl zwischen den Einlasskanalmündungsöffnungen als auch zwischen den Auslasskanalmündungsöffnungen verlaufen. Dabei ist vorgesehen, dass der Kraftstoffinjektor auf einer den Auslasskanalmündungsöffnungen abgewandten Seite einer die Längsmittelachse aufnehmenden und senkrecht auf den Ebenen stehenden gedachten Quermittelebene angeordnet ist.

Auf die Vorteile einer derartigen Ausgestaltung der Brennkraftmaschine beziehungsweise eines derartigen Vorgehens wurde bereits hingewiesen. Sowohl die Brennkraftmaschine als auch das Verfahren zu ihrem Betreiben können gemäß den Ausführungen im Rahmen dieser Beschreibung weitergebildet sein, sodass insoweit auf diese verwiesen wird.

Eine Weiterbildung der Erfindung sieht vor, dass während des Betriebs der Brennkraftmaschine zeitweise nur die erste Zündkerze und zeitweise nur die zweite Zündkerze zum Zünden des Kraftstoff-Frischgas-Gemisch verwendet wird. In einem Kennfeld der Brennkraftmaschine, in welchem das von der Brennkraftmaschine bereitgestellte Antriebsdrehmoment über der Drehzahl der Brennkraftmaschine aufgetragen ist, lassen sich insoweit unterschiedliche Betriebsbereiche der Brennkraftmaschine definieren. In einem ersten der Betriebsbereiche wird ausschließlich die erste Zündkerze und in einem zweiten der Betriebsbereiche ausschließlich die zweite Zündkerze zum Zünden des Kraftstoff-Frischgas-Gemisch verwendet.

Der erste Betriebsbereich liegt vorzugsweise oberhalb einer Kennlinie in dem Kennfeld vor, der zweite Betriebsbereich unter der Kennlinie. Der Betrieb in dem ersten Betriebsbereich wird insoweit beispielsweise verwendet, um eine maximale Leistung der Brennkraftmaschine beziehungsweise ihre Nennleistung abzurufen. Der zweite Betriebsbereich kommt zum Beispiel zum Heizen einer Abgasnachbehandlungseinrichtung, insbesondere eines Fahrzeugkatalysators, zum Einsatz. Zusätzlich oder alternativ wird er während eines Schubbetriebs und/oder eines Starts und/oder eines Warmlaufbetriebs der Brennkraftmaschine und/oder bei einer niedrigen Last und/oder einer niedrigen Drehzahl verwendet.

Es kann vorgesehen sein, dass zwischen dem ersten Betriebsbereich und dem zweiten Betriebsbereich ein Übergangsbetriebsbereich vorliegt. Beispielsweise ist der Übergangsbertriebsbereich von dem ersten Betriebsbereich von der Kennlinie beziehungsweise einer ersten Kennlinie abgetrennt und der zweite Betriebsbereich von dem Übergangsbetriebsbereich von einer zweiten Kennlinie. Anders ausgedrückt liegt der erste Betriebsbereich oberhalb der ersten Kennlinie, der Übergangsbetriebsbereich zwischen der ersten Kennlinie und der zweiten Kennlinie sowie der zweite Betriebsbereich unterhalb der zweiten Kennlinie vor.

Es kann nun vorgesehen sein, dass in dem ersten Betriebsbereich nur die erste Zündkerze, in dem zweiten Betriebsbereich nur die zweite Zündkerze und in dem Übergangsbereich wahlweise die erste Zündkerze, die zweite Zündkerze oder sowohl die erste Zündkerze als auch die zweite Zündkerze zum Zünden des Kraftstoff-Frischgas-Gemischs in der Brennkammer verwendet wird. Beispielsweise wird in dem Übergangsbereich anhand eines Zustandsparameters der Brennkraftmaschine festgelegt, welche Zündkerze verwendet wird. Beispielsweise wird bei einem in einem ersten Wertebereich liegenden Wert des Zustandsparameters die erste Zündkerze und bei in einem von dem ersten Wertebereich verschiedenen zweiten Wertebereich liegenden Wert des Zustandsparameters die zweite Zündkerze verwendet. Als Zustandsparameter wird zum Beispiel eine Kühlwassertemperatur herangezogen.

Zusätzlich oder alternativ wird ein hysterseartiges Umschaltverhalten umgesetzt. So wird beispielsweise bei einem Durchlaufen des Übergangsbereichs ausgehend von dem ersten Betriebsbereich in dem Übergangsbereich ausschließlich die erste Zündkerze verwendet, nämlich bis zum Erreichen der zweiten Kennlinie. Ab dem Erreichen beziehungsweise Unterschreiten der Kennlinie wird ausschließlich die zweite Zündkerze verwendet. Umgekehrt wird bei einem Durchlaufen des Übergangsbereichs ausgehend von dem zweiten Betriebsbereich in dem Übergangsbereich die zweite Zündkerze verwendet, nämlich bis zum Erreichen der ersten Kennlinie. Ab dem Erreichen beziehungsweise Überschreiten der ersten Kennlinie wird ausschließlich die erste Zünderkerze verwendet.

Eine Weiterbildung der Erfindung sieht vor, dass die Brennkraftmaschine gemäß Miller-Kreisprozess betrieben wird. Das bedeutet, dass zumindest eines der Einlassventile, insbesondere beide Einlassventile, noch während eines Ansaugens von Frischgas durch die Einlasskanäle schließen. Hierdurch wird eine Füllung des Brennraums mit Frischgas und der nach dem Verdichten des Frischgases in dem Zylinder vorliegende Druck verringert. Somit wird eine Steigerung der Effizienz der Brennkraftmaschine realisiert. Alternativ zu dem Miller-Kreisprozess kann der Atkinson-Kreisprozess zum Betreiben der Brennkraftmaschine verwendet werden. Auch mit diesem wird eine hohe Effizienz umgesetzt.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Bereichs einer Brennkraftmaschine, nämlich eine schematische Draufsicht auf ein Zylinderdach der Brennkraftmaschine, sowie
- Figur 2: eine schematische Schnittdarstellung der Brennkraftmaschine.

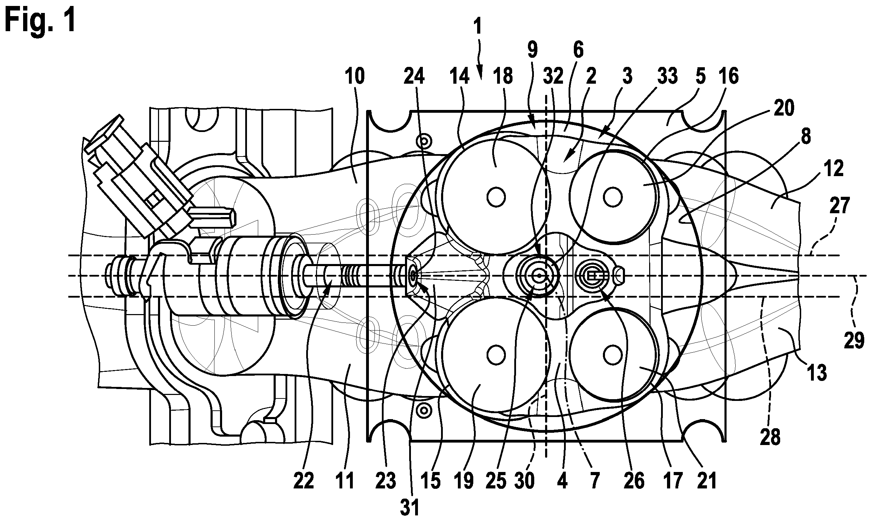

Die Figur 1 zeigt eine schematische Darstellung einer Brennkraftmaschine 1, wobei insbesondere eine Draufsicht auf ein Zylinderdach 2 eines Zylinders 3 ausgehend von einem Brennraum 4 des Zylinders 3 gezeigt ist. Der Zylinder 3 verfügt über eine in einem Zylinderkurbelgehäuse 5 der Brennkraftmaschine 1 ausgebildete Zylinderbohrung 6. Die Zylinderbohrung 6 weist eine Längsmittelachse 7 auf und wird in radialer Richtung nach außen bezüglich dieser Längsmittelachse 7 von einer Zylinderwand 8 begrenzt. Der Brennraum 4 ist in axialer Richtung bezüglich der Längsmittelachse 7 einerseits von einem hier nicht dargestellten, in dem Zylinder 3 längsbeweglich verlagerbaren Kolben und andererseits von dem Zylinderdach 2 begrenzt. Das Zylinderdach 2 ist beispielsweise Bestandteil eines Zylinderkopfs 9, der an dem Zylinderkurbelgehäuse 5 befestigt ist.

Die Brennkraftmaschine 1 weist einen ersten Einlasskanal 10, einen zweiten Einlasskanal 11, einen ersten Auslasskanal 12 sowie einen zweiten Auslasskanal 13 auf. Der erste Einlasskanal 10 mündet über eine erste Einlasskanalmündungsöffnung 14 in den Brennraum 4 ein, der zweite Einlasskanal 11 über eine zweite Einlasskanalmündungsöffnung 15. Der erste Auslasskanal 12 geht über eine erste Auslasskanalmündungsöffnung 16 von dem Brennraum 4 aus, der zweite Auslasskanal 13 über eine zweite Auslasskanalmündungsöffnung 17. Der erste Einlasskanal 10 weist ein erstes Einlassventil 18, der zweiter Einlasskanal 11 ein zweites Einlassventil 19, der erste Auslasskanal 12 ein erstes Auslassventil 20 und der zweite Auslasskanal 13 ein zweites Auslassventil 21 auf. Die Einlassventile 18 und 19 sind zum Einstellen einer Durchströmungsquerschnittsfläche der Einlasskanäle 10 und 11 und die Auslassventile 20 und 21 zum Einstellen einer Durchströmungsquerschnittsfläche der Auslasskanäle 12 und 13 vorgesehen und ausgestaltet.

Zusätzlich zu den bereits genannten Elementen weist die Brennkraftmaschine 1 einen Kraftstoffinjektor 22 mit einer Einspritzdüse 23 auf, die über eine mindestens eine Mündungsöffnung 24 in den Brennraum 4 einmündet. Vorzugsweise liegen mehrere Mündungsöffnungen 24 vor. Weiterhin verfügt die Brennkraftmaschine 1 über eine erste Zündkerze 25 und eine zweite Zündkerze 26. Es ist erkennbar, dass die erste Zündkerze 25, die zweite Zündkerze 26 und der Kraftstoffinjektor 22, insbesondere seine Einspritzdüse 23 beziehungsweise die mindestens eine Mündungsöffnung 24, zwischen zwei gedachten parallelen Ebenen 27 und 28 liegen. Die beiden Ebenen 27 und 28 sind zueinander parallel und ebenfalls parallel zu der Längsmittelachse 7 des Zylinders 3. Sie verlaufen zudem jeweils zwischen den Einlassventilen 18 und 19 sowie zwischen den Auslassventilen 20 und 21 hindurch.

In dem hier dargestellten Ausführungsbeispiel liegt die Ebene 27 tangential an der ersten Einlasskanalmündungsöffnung 14 und die Ebene 28 tangential an der zweiten Einlasskanalmündungsöffnung 15 an. Die beiden Ebenen 27 und 28 sind zudem parallel zu einer Längsmittelebene 29 angeordnet, die die Längsmittelachse 7 in sich aufnimmt. Die Längsmittelebene 29 verläuft symmetrisch zwischen den Einlasskanalmündungsöffnungen 14 und 15 sowie den Auslasskanalmündungsöffnungen 16 und 17. Das bedeutet, dass die Längsmittelebene 29 eine Symmetrieebene für die Einlasskanalmündungsöffnungen 14 und 15 sowie für die Auslasskanalmündungsöffnungen 16 und 17 darstellt. Senkrecht auf der Längsmittelebene 29 und die Längsmittelachse 7 ebenfalls vollständig in sich aufnehmend liegt eine Quermittelebene 30 vor.

Um eine besonders geringe thermische Belastung für den Kraftstoffinjektor 22 zu erzielen, ist dieser auf der den Einlasskanalmündungsöffnungen 14 und 15 zugewandten Seite der Quermittelebene 30 angeordnet. Anders ausgedrückt liegt er in Richtung einer gedachten Mittelgeraden auf der den Auslasskanalmündungsöffnungen 16 und 17 abgewandten Seite der Einlasskanalmündungsöffnungen 14 und 15. Die Mittelgerade liegt in der Längsmittelebene 29 und steht senkrecht auf der Längsmittelachse 7. Es ist zudem erkennbar, dass die beiden Zündkerzen 25 und 26 zumindest bereichsweise auf gegenüberliegenden Seiten der Quermittelebene 30 angeordnet sind. Hieraus ergibt sich eine Anordnung, gemäß welcher die erste Zündkerze 25 zwischen den Einlasskanalmündungsöffnungen 14 und 15 und die zweite Zündkerze 26 zwischen den Auslasskanalmündungsöffnungen 16 und 17 angeordnet ist.

Der Kraftstoffinjektor 22 beziehungsweise seine Einspritzdüse 23 mündet in einen Teilraum des Brennraums 4 ein, der in einer Vertiefung 31 des Zylinderdachs 2 vorliegt. Die Vertiefung weist hierbei senkrecht zu der Mittelgeraden vorzugsweise eine Breite auf, die größer ist als ein Abstand der beiden Einlasskanalmündungsöffnungen 14 und 15 voneinander in derselben Richtung. Die Vertiefung 31 erstreckt sich zudem in Draufsicht zwischen die Einlasskanalmündungsöffnungen 14 und 15 hinein, nämlich mit ihrem den Zündkerzen 25 und 26 zugewandten Ende. Die Einspritzdüse 23 mündet hingegen an einem den Zündkerzen 25 und 26 abgewandten Ende der Vertiefung 31 in diese ein.

Die beiden Zündkerzen 25 und 26 sind unterschiedlich ausgestaltet und/oder angeordnet. So liegt eine Zündstelle der ersten Zündkerze 25 in einer Vorkammer 32 vor, die von einer Vorkammerwand 33 von dem Brennraum 4 separiert ist. In der Vorkammerwand 33 ist jedoch wenigstens eine Überströmöffnung ausgebildet, über welche die Vorkammer 32 strömungstechnisch an den Brennraum 4 angebunden ist. Eine Zündstelle der zweiten Zündkerze 26 hingegen ist unmittelbar in dem Brennraum 4 angeordnet. Hierzu ist die zweite Zündkerze 26 als herkömmliche Hakenzündkerze ausgestaltet, welche in den Brennraum 4 hineinragt. In Richtung der Mittelgeraden gesehen ist die erste Zündkerze 25 zwischen dem Kraftstoffinjektor 22 beziehungsweise dessen Einspritzdüse 23 und der zweiten Zündkerze 26 angeordnet. Hierdurch ergibt sich eine geringe thermische Belastung der ersten Zündkerze 25.

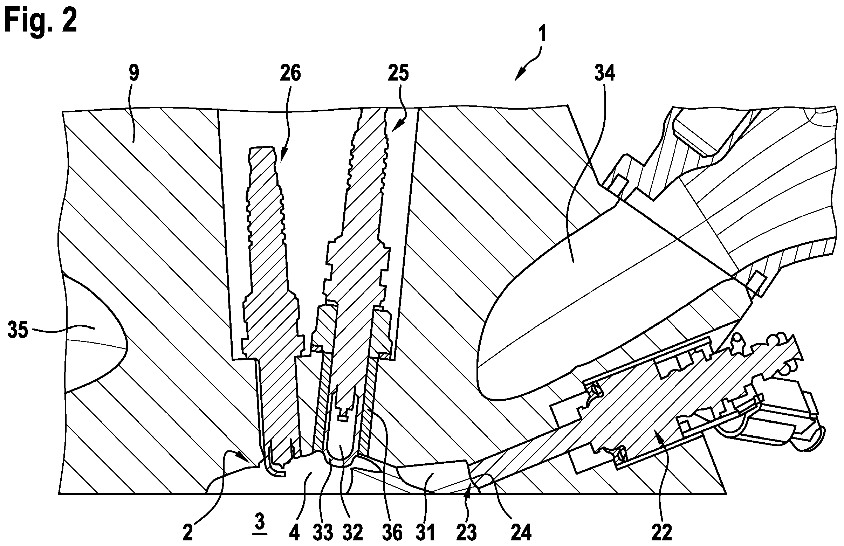

Die Figur 2 zeigt eine Schnittdarstellung der Brennkraftmaschine 1 entlang der Längsmittelebene 29. Erkennbar ist ein Einlasskanal 34, von welchem die beiden Einlasskanäle 10 und 11 ausgehen (hier nicht erkennbar). Ebenso ist ein Auslasskanal 35 erkennbar, in welchem die beiden Auslasskanäle 12 und 13 zusammenlaufen. Dargestellt sind die beiden Zündkerzen 25 und 26. Es wird deutlich, dass die erste Zündkerze 25 als Vorkammerzündkerze ausgestaltet ist und entsprechend die Vorkammer 32 aufweist. Die Vorkammer 32 beziehungsweise die Vorkammerwand 33 erstreckt sich in eine Zündkerzenaufnahme 36 hinein, welche mit einem Schraubinnengewinde zur Befestigung der ersten Zündkerze 25 ausgestattet ist. Die Zündstelle der ersten Zündkerze 24 ist in dieser Zündkerzenaufnahme 36 angeordnet. Die Zündstelle der zweiten Zündkerze 26 liegt hingegen in dem Brennraum 4 vor. Hierzu erstreckt sich die zweite Zündkerze 26 bis in diesen hinein. Bei der beschriebenen Ausgestaltung sind die Vorkammerwand 33 und die erste Zündkerze 25 reversibel beziehungsweise beschädigungsfrei lösbar aneinander befestigt. Es kann jedoch auch vorgesehen sein, dass die Vorkammerwand 33 und entsprechend die Vorkammer 32 integraler Bestandteil der ersten Zündkerze 25 sind.

Die beschriebene Ausgestaltung der Brennkraftmaschine 1 hat den Vorteil, dass eine thermische Belastung der ersten Zündkerze 25 sowie des Kraftstoffinjektors 22 gering ist. Dies wird durch die Anordnung der ersten Zündkerze 25 und des Kraftstoffinjektors 22 auf Seiten der Einlasskanäle 10 und 11 erzielt. Die geringe thermische Belastung ermöglicht eine hohe Leistungsdichte der Brennkraftmaschine, welche insbesondere durch das Vorsehen eines Verdichters, beispielsweise eines Abgasturboladers oder eines Kompressors, erzielt wird. Auch kann die Brennkraftmaschine 1 zur Leistungssteigerung gemäß dem Atkinson-Kreisprozess oder den Miller-Kreisprozess betrieben werden.

### BEZUGSZEICHENLISTE:

- 1: Brennkraftmaschine
- 2: Zylinderdach
- 3: Zylinder
- 4: Brennraum
- 5: Zylinderkurbelgehäuse
- 6: Zylinderbohrung
- 7: Längsmittelachse
- 8: Zylinderwand
- 9: Zylinderkopf
- 10: erster Einlasskanal
- 11: zweiter Einlasskanal
- 12: erster Auslasskanal
- 13: zweiter Auslasskanal
- 14: erste Einlasskanalmündungsöffnung
- 15: zweite Einlasskanalmündungsöffnung
- 16: erste Auslasskanalmündungsöffnung
- 17: zweite Auslasskanalmündungsöffnung
- 18: erstes Einlassventil
- 19: zweites Einlassventil
- 20: erstes Auslassventil
- 21: zweites Auslassventil
- 22: Kraftstoffinjektor
- 23: Einspritzdüse
- 24: Mündungsöffnung
- 25: erste Zündkerze
- 26: zweite Zündkerze
- 27: Ebene
- 28: Ebene
- 29: Längsmittelebene
- 30: Quermittelebene
- 31: Vertiefung
- 32: Vorkammer
- 33: Vorkammerwand
- 34: Einlasskanal
- 35: Auslasskanal
- 36: Zündkerzenaufnahme

## Patentansprüche

1. Brennkraftmaschine (1) mit wenigstens einem einen Brennraum (4) aufweisenden Zylinder (3), wobei in den Brennraum (4) über eine erste Einlasskanalmündungsöffnung (14) ein erster Einlasskanal (10) mit einem ersten Einlassventil (18) sowie über eine zweite Einlasskanalmündungsöffnung (15) ein zweiter Einlasskanal (11) mit einem zweiten Einlassventil (19) einmünden und von dem Brennraum (4) über eine erste Auslasskanalmündungsöffnung (16) ein erster Auslasskanal (12) mit einem ersten Auslassventil (20) sowie über eine zweite Auslasskanalmündungsöffnung (17) ein zweiter Auslasskanal (13) mit einem zweiten Auslassventil (21) ausgehen, mit einem Kraftstoffinjektor (22) zum Einbringen von Kraftstoff in den Brennraum (4) zum Erzeugen eines Kraftstoff-Frischgas-Gemischs und mit einer ersten Zündkerze (25) sowie einer zweiten Zündkerze (26) zum Zünden des Kraftstoff-Frischgas-Gemischs, wobei eine Zündstelle der ersten Zündkerze (24) außerhalb des Brennraums (4) in einer mit dem Brennraum (4) strömungstechnisch verbundenen Vorkammer (32) angeordnet ist, und wobei die erste Zündkerze (25), die zweite Zündkerze (26) und der Kraftstoffinjektor (22) zwischen zwei gedachten parallelen Ebenen (27, 28) liegen, die parallel zu einer Längsmittelachse (7) des Zylinders (3) angeordnet und beabstandet voneinander sowohl zwischen den Einlasskanalmündungsöffnungen (14, 15) als auch zwischen den Auslasskanalmündungsöffnungen (16, 17) verlaufen, wobei der Kraftstoffinjektor (22) auf einer den Auslasskanalmündungsöffnungen (16, 17) abgewandten Seite einer die Längsmittelachse (7) aufnehmenden und senkrecht auf den Ebenen (27, 28) stehenden gedachten Quermittelebene (30) angeordnet ist, **dadurch gekennzeichnet, dass** eine Einspritzdüse (23) des Kraftstoffinjektors (22) in einen Teilraum des Brennraums (4) einmündet, der von einer sich zwischen die Einlasskanalmündungsöffnungen (14, 15) erstreckenden Vertiefung (31) eines Zylinderdachs (2) des Zylinders (3) gebildet ist.

2. Brennkraftmaschine nach Anspruch 1, **dadurch gekennzeichnet, dass** die Vertiefung (31) sich auf eine Breite aufweitet, die größer ist als ein Abstand der Einlasskanalmündungsöffnungen (14, 15) voneinander.

3. Brennkraftmaschine nach einem der vorhergehenden Ansprüche, **dadurch gekennzeichnet, dass** die Einspritzdüse (23) in Richtung einer senkrecht sowohl auf der Längsmittelachse (7) als auch auf der Quermittelebene (30) stehenden gedachten Mittelgeraden von den Einlasskanalmündungsöffnungen (14, 15) beabstandet angeordnet ist.

4. Brennkraftmaschine nach einem der vorhergehenden Ansprüche, **dadurch gekennzeichnet, dass** die erste Zündkerze (25) und die zweite Zündkerze (26) auf gegenüberliegenden Seiten der Quermittelebene (30) angeordnet sind.

5. Brennkraftmaschine nach einem der vorhergehenden Ansprüche, **dadurch gekennzeichnet, dass** in die Vorkammer (32) ein weiterer Kraftstoffinjektor der Brennkraftmaschine (1) einmündet.

6. Brennkraftmaschine nach einem der vorhergehenden Ansprüche, **dadurch gekennzeichnet, dass** eine Zündstelle der zweiten Zündkerze (26) in dem Brennraum (4) angeordnet ist.

7. Brennkraftmaschine nach einem der vorhergehenden Ansprüche, **dadurch gekennzeichnet, dass** - in Richtung der Mittelgeraden gesehen - die erste Zündkerze (25) zwischen dem Kraftstoffinjektor (22) und der zweiten Zündkerze (26) angeordnet ist.

8. Verfahren zum Betreiben einer Brennkraftmaschine (1), insbesondere einer Brennkraftmaschine (1) nach einem oder mehreren der vorhergehenden Ansprüche, wobei die Brennkraftmaschine (1) über wenigstens einen einen Brennraum (4) aufweisenden Zylinder (3) verfügt, wobei in den Brennraum (4) über eine erste Einlasskanalmündungsöffnung (14) ein erster Einlasskanal (10) mit einem ersten Einlassventil (18) sowie über eine zweite Einlasskanalmündungsöffnung (15) ein zweiter Einlasskanal (11) mit einem zweiten Einlassventil (19) einmünden und von dem Brennraum (4) über eine erste Auslasskanalmündungsöffnung (16) ein erster Auslasskanal (12) mit einem ersten Auslassventil (20) sowie über eine zweite Auslasskanalmündungsöffnung (17) ein zweiter Auslasskanal (13) mit einem zweiten Auslassventil (21) ausgehen, und die Brennkraftmaschine (1) weiter einen Kraftstoffinjektor (22) zum Einbringen von Kraftstoff in den Brennraum (4) zum Erzeugen eines Kraftstoff-Frischgas-Gemischs und eine erste Zündkerze (25) sowie eine zweite Zündkerze (26) zum Zünden des Kraftstoff-Frischgas-Gemischs aufweist, wobei eine Zündstelle der ersten Zündkerze (24) außerhalb des Brennraums (4) in einer mit dem Brennraum (4) strömungstechnisch verbundenen Vorkammer (32) angeordnet ist, und wobei die erste Zündkerze (24), die zweite Zündkerze (26) und der Kraftstoffinjektor (22) zwischen zwei gedachten parallelen Ebenen (27, 28) liegen, die parallel zu einer Längsmittelachse (7) des Zylinders (3) angeordnet und beabstandet voneinander sowohl zwischen den Einlasskanalmündungsöffnungen (14, 15) als auch zwischen den Auslasskanalmündungsöffnungen (16, 17) verlaufen, wobei der Kraftstoffinjektor (22) auf einer den Auslasskanalmündungsöffnungen (16, 17) abgewandten Seite einer die Längsmittelachse (7) aufnehmenden und senkrecht auf den Ebenen (27, 28) stehenden gedachten Quermittelebene (30) angeordnet ist, **dadurch gekennzeichnet, dass** eine Einspritzdüse (23) des Kraftstoffinjektors (22) in einen Teilraum des Brennraums (4) einmündet, der von einer sich zwischen die Einlasskanalmündungsöffnungen (14, 15) erstreckenden Vertiefung (31) eines Zylinderdachs (2) des Zylinders (3) gebildet ist.

9. Verfahren nach Anspruch 8, **dadurch gekennzeichnet, dass** während des Betriebs der Brennkraftmaschine (1) zeitweise nur die erste Zündkerze (25) und zeitweise nur die zweite Zündkerze (26) zum Zünden des Kraftstoff-Frischgas-Gemischs verwendet wird.

## Claims

1. Internal combustion engine (1) with at least one cylinder (3) comprising a combustion chamber (4), wherein a first inlet passage (10) with a first inlet valve (18) opens into the combustion chamber (4) via a first inlet passage opening (14) and a second inlet passage (11) with a second inlet valve (19) opens into the combustion chamber (4) via a second inlet passage opening (15), and a first outlet passage (12) with a first outlet valve (20) opens from the combustion chamber (4) via a first outlet passage opening (16) and a second outlet passage (13) with a second outlet valve (21) opens from the combustion chamber (4) via a second outlet passage opening (17), with a fuel injector (22) for introducing fuel into the combustion chamber (4) to produce a fresh air-fuel mixture, and with a first spark plug (25) and a second spark plug (26) for igniting the fresh air-fuel mixture, wherein an ignition point of the first spark plug (24) is arranged outside the combustion chamber (4) in a prechamber (32) fluid mechanically connected to the combustion chamber (4), and wherein the first spark plug (25), the second spark plug (26) and the fuel injector (22) are located between two imaginary parallel planes (27, 28) which are arranged parallel to a longitudinal central axis (7) of the cylinder (3) and spaced apart from each other both between the inlet passage openings (14, 15) and between the outlet passage openings (16, 17), wherein the fuel injector (22) is arranged on a side facing away from the outlet passage openings (16, 17) of an imaginary transverse central plane (30) that accommodates the longitudinal central axis (7) and is perpendicular to the planes (27, 28), **characterised in that** an injection nozzle (23) of the fuel injector (22) opens into a partial space of the combustion chamber (4) which is formed by a recess (31) of a cylinder top (2) of the cylinder (3), which recess (31) extends between the inlet passage openings (14, 15).

2. Internal combustion engine according to claim 1, **characterised in that** the recess (31) widens to a width that is greater than the distance between the inlet passage openings (14, 15).

3. Internal combustion engine according to one of the preceding claims, **characterised in that** the injection nozzle (23) is arranged at a distance from the inlet passage openings (14, 15) in the direction of an imaginary central line perpendicular to both the longitudinal central axis (7) and the transverse central plane (30).

4. Internal combustion engine according to one of the preceding claims, **characterised in that** the first spark plug (25) and the second spark plug (26) are arranged on opposite sides of the transverse central plane (30).

5. Internal combustion engine according to one of the preceding claims, **characterised in that** a further fuel injector of the internal combustion engine (1) opens into the prechamber (32).

6. Internal combustion engine according to one of the preceding claims, **characterised in that** an ignition point of the second spark plug (26) is arranged in the combustion chamber (4).

7. Internal combustion engine according to one of the preceding claims, **characterised in that** - viewed in the direction of the central line - the first spark plug (25) is arranged between the fuel injector (22) and the second spark plug (26).

8. Method for operating an internal combustion engine (1), in particular an internal combustion engine (1) according to one or more of the preceding claims, wherein the internal combustion engine (1) has at least one cylinder (3) comprising a combustion chamber (4), wherein a first inlet passage (10) with a first inlet valve (18) opens into the combustion chamber (4) via a first inlet passage opening (14) and a second inlet passage (11) with a second inlet valve (19) opens into the combustion chamber (4) via a second inlet passage opening (15), and a first outlet passage (12) with a first outlet valve (20) opens from the combustion chamber (4) via a first outlet passage opening (16) and a second outlet passage (13) with a second outlet valve (21) opens from the combustion chamber (4) via a second outlet passage opening (17), and the internal combustion engine (1) further has a fuel injector (22) for introducing fuel into the combustion chamber (4) to produce a fresh air-fuel mixture, and a first spark plug (25) and as a second spark plug (26) for igniting the fresh air-fuel mixture, wherein an ignition point of the first spark plug (24) is arranged outside the combustion chamber (4) in a prechamber (32) fluid mechanically connected to the combustion chamber (4), and wherein the first spark plug (25), the second spark plug (26) and the fuel injector (22) are located between two imaginary parallel planes (27, 28) which are arranged parallel to a longitudinal central axis (7) of the cylinder (3) and spaced apart from each other both between the inlet passage openings (14, 15) and between the outlet passage openings (16, 17), wherein the fuel injector (22) is arranged on a side facing away from the outlet passage openings (16, 17) of an imaginary transverse central plane (30) that accommodates the longitudinal central axis (7) and is perpendicular to the planes (27, 28), **characterised in that** an injection nozzle (23) of the fuel injector (22) opens into a partial space of the combustion chamber (4) which is formed by a recess (31) of a cylinder top (2) of the cylinder (3), which recess (31) extends between the inlet passage openings (14, 15).

9. Method according to claim 8, **characterised in that** during operation of the internal combustion engine (1) intermittently only the first spark plug (25) is used and intermittently only the second spark plug (26) is used to ignite the fuel-fresh gas mixture.

## Revendications

1. Moteur à combustion interne (1) avec au moins un cylindre (3) comprenant une chambre de combustion (4), dans lequel un premier canal d'admission (10) avec une première soupape d'admission (18) débouche, par une première ouverture d'embouchure de canal d'admission (14), ainsi qu'un deuxième canal d'admission (11) avec une deuxième soupape d'admission (19) débouche, par une deuxième ouverture d'embouchure de canal d'admission (15), dans la chambre de combustion (4), et un premier canal d'échappement (12) avec une première soupape d'échappement (20) sort, par une première ouverture d'embouchure de canal d'échappement (16), ainsi qu'un deuxième canal d'échappement (13) avec une deuxième soupape d'échappement (21) sort, par une deuxième ouverture d'embouchure de canal d'échappement (17), de la chambre de combustion (4), avec un injecteur de carburant (22) pour l'introduction de carburant dans la chambre de combustion (4) pour la production d'un mélange carburant-gaz frais et avec une première bougie d'allumage (25) ainsi qu'une deuxième bougie d'allumage (26) pour l'allumage du mélange carburant-gaz frais, dans lequel un point d'allumage de la première bougie d'allumage (24) est disposé en dehors de la chambre de combustion (4) dans une préchambre (32) reliée fluidiquement à la chambre de combustion (4), et dans lequel la première bougie d'allumage (25), la deuxième bougie d'allumage (26) et l'injecteur de carburant (22) se situent entre deux plans parallèles imaginaires (27, 28), lesquels sont disposés parallèlement à un axe médian longitudinal (7) du cylindre (3) et espacés l'un de l'autre, à la fois entre les ouvertures d'embouchure de canal d'admission (14, 15) et entre les ouvertures d'embouchure de canal d'échappement (16, 17), dans lequel l'injecteur de carburant (22) est disposé sur un côté opposé aux ouvertures d'embouchure de canal d'échappement (16, 17) d'un plan médian transversal imaginaire (30) recevant l'axe médian longitudinal (7) et s'étendant perpendiculairement aux plans (27, 28), **caractérisé en ce qu'**une buse d'injection (23) de l'injecteur de carburant (22) débouche dans une chambre partielle de la chambre de combustion (4) qui est formée par une cavité (31), s'étendant entre les ouvertures d'embouchure de canal d'admission (14, 15), d'un couvercle de cylindre (2) du cylindre (3).

2. Moteur à combustion interne selon la revendication 1, **caractérisé en ce que** la cavité (31) s'étend sur une largeur qui est supérieure à une distance séparant les ouvertures d'embouchure de canal d'admission (14, 15).

3. Moteur à combustion interne selon l'une des revendications précédentes, **caractérisé en ce que** la buse d'injection (23) est disposée à distance des ouvertures d'embouchure de canal d'admission (14, 15) dans la direction d'une droite médiane imaginaire s'étendant perpendiculairement à la fois à l'axe médian longitudinal (7) et au plan médian transversal (30).

4. Moteur à combustion interne selon l'une des revendications précédentes, **caractérisé en ce que** la première bougie d'allumage (25) et la deuxième bougie d'allumage (26) sont disposées sur des côtés opposés du plan médian transversal (30).

5. Moteur à combustion interne selon l'une des revendications précédentes, **caractérisé en ce qu'**un injecteur de carburant supplémentaire du moteur à combustion interne (1) débouche dans la préchambre (32).

6. Moteur à combustion interne selon l'une des revendications précédentes, **caractérisé en ce qu'**un point d'allumage de la deuxième bougie d'allumage (26) est disposé dans la chambre de combustion (4).

7. Moteur à combustion interne selon l'une des revendications précédentes, **caractérisé en ce que** - vue dans la direction de la droite médiane - la première bougie d'allumage (25) est située entre l'injecteur de carburant (22) et la deuxième bougie d'allumage (26).

8. Procédé pour le fonctionnement d'un moteur à combustion interne (1), en particulier d'un moteur à combustion interne (1) selon une ou plusieurs des revendications précédentes, dans lequel le moteur à combustion interne (1) est pourvu d'au moins un cylindre (3) comprenant une chambre de combustion (4), dans lequel un premier canal d'admission (10) avec une première soupape d'admission (18) débouche, par une première ouverture d'embouchure de canal d'admission (14), ainsi qu'un deuxième canal d'admission (11) avec une deuxième soupape d'admission (19) débouche, par une deuxième ouverture d'embouchure de canal d'admission (15), dans la chambre de combustion (4), et un premier canal d'échappement (12) avec une première soupape d'échappement (20) sort, par une première ouverture d'embouchure de canal d'échappement (16), ainsi qu'un deuxième canal d'échappement (13) avec une deuxième soupape d'échappement (21) sort, par une deuxième ouverture d'embouchure de canal d'échappement (17), de la chambre de combustion (4), et le moteur à combustion interne (1) comprend en outre un injecteur de carburant (22) pour l'introduction de carburant dans la chambre de combustion (4) pour la production d'un mélange carburant-gaz frais et une première bougie d'allumage (25) ainsi qu'une deuxième bougie d'allumage (26) pour l'allumage du mélange carburant-gaz frais, dans lequel un point d'allumage de la première bougie d'allumage (24) est disposé en dehors de la chambre de combustion (4) dans une préchambre (32) reliée fluidiquement à la chambre de combustion (4), et dans lequel la première bougie d'allumage (24), la deuxième bougie d'allumage (26) et l'injecteur de carburant (22) se situent entre deux plans parallèles imaginaires (27, 28), lesquels sont disposés parallèlement à un axe médian longitudinal (7) du cylindre (3) et espacés l'un de l'autre, à la fois entre les ouvertures d'embouchure de canal d'admission (14, 15) et entre les ouvertures d'embouchure de canal d'échappement (16, 17), dans lequel l'injecteur de carburant (22) est disposé sur un côté opposé aux ouvertures d'embouchure de canal d'échappement (16, 17) d'un plan médian transversal imaginaire (30) recevant l'axe médian longitudinal (7) et s'étendant perpendiculairement aux plans (27, 28), **caractérisé en ce qu'**une buse d'injection (23) de l'injecteur de carburant (22) débouche dans une chambre partielle de la chambre de combustion (4) qui est formée par une cavité (31), s'étendant entre les ouvertures d'embouchure de canal d'admission (14, 15), d'un couvercle de cylindre (2) du cylindre (3).

9. Procédé selon la revendication 8, **caractérisé en ce que,** pendant le fonctionnement du moteur à combustion interne (1), par moments uniquement la première bougie d'allumage (25) est utilisée pour l'allumage du mélange carburant-gaz frais, et par moments uniquement la deuxième bougie d'allumage (26) est utilisée pour l'allumage du mélange carburant-gaz frais.
